# EUROPÄISCHE PATENTSCHRIFT

(11) **EP 3 127 763 B1**
(45) Veröffentlichungstag und Bekanntmachung des Hinweises auf die Patenterteilung: **07.03.2018**
(21) Anmeldenummer: 16181052.8
(22) Anmeldetag: 25.07.2016
(51) Int. Cl.: B60R 25/00, B60W 50/02, B60W 50/04, B60W 40/10, G01P 1/12, G01P 3/56

(54) **VERFAHREN ZUR BETRIEBSVALIDIERUNG EINER SENSOREINHEIT, SENSOREINHEIT UND TACHOGRAPHSYSTEM**
METHOD FOR OPERATING VALIDATION OF A SENSOR UNIT, SENSOR UNIT AND TACHOGRAPH SYSTEM
PROCEDE DE VALIDATION DE FONCTIONNEMENT D'UNE UNITE DE DETECTION, UNITE DE DETECTION ET SYSTEME TACHYGRAPHE

(30) Priorität: 03.08.2015 DE 102015214791
(43) Veröffentlichungstag der Anmeldung: 08.02.2017
(73) Patentinhaber: Continental Automotive GmbH, 30165 Hannover (DE)
(72) Erfinder: Grill, Thomas, 78048 Villingen-Schwenningen (DE); Lange, Roland, 78086 Brigachtal (DE); Böhler, Detlef, 78479 Reichenau (DE); Pfaff, Thomas, 78048 Villingen (DE); Köhn, Norbert, 78050 Villingen-Schwenningen (DE)

(56) Entgegenhaltungen:
- WO-A1-2013/056740
- DE-A1-102006 040 297
- DE-A1-102009 051 350
- DE-A1-102011 110 012

## Beschreibung

Es werden ein Verfahren zur Betriebsvalidierung einer Sensoreinheit für ein Fahrzeug sowie eine korrespondierende Sensoreinheit für ein Fahrzeug angegeben. Es wird ferner ein Tachographsystem für ein Fahrzeug angegeben.

Ein Verfahren zum Validieren von ersten bis dritten Sensorlesewerten in einem dynamischen Fahrzeugsteuersystem offenbart DE 10 2011 110 012 A1, wobei der zweite Sensorlesewert validiert wird, wenn der erste Sensorlesewert bereits validiert ist, und der dritte Sensorlesewert validiert wird, wenn der zweite Sensorlesewert bereits validiert ist.

Ferner ist aus DE 10 2006 040 297 A1 ein Verfahren zum Erfassen und Speichern wenigstens der Geschwindigkeit als registrierrelevanter Information für ein Tachographensystem bekannt, wobei in einer Recheneinheit Signale zur Bestimmung der Geschwindigkeit von wenigstens zwei unabhängigen Sensoren erfasst und miteinander verglichen werden und bei signifikant abweichenden Signalen eine sensorbezogene Fehlermeldung gespeichert wird.

Weiterhin offenbart WO 2013/056740 A1 ein Verfahren zur Signierung von fahrzeugrelevanten Daten, wobei die fahrzeugrelevanten Daten mit einem Hashverfahren verarbeitet werden und hierzu eine Prüfsumme berechnet wird und die Prüfsumme und die fahrzeugrelevanten Daten gemeinsam mit einem sicheren Schlüssel mittels einer asymmetrischen Verschlüsselung verschlüsselt werden.

Aus DE 10 2009 051 350 A1 ist ein Verfahren zum Betreiben eines Tachographen mit einem Applikationscontroller und einem Sicherheitscontroller bekannt, wobei dem Applikationscontroller ein Speicher zugeordnet ist, in dem ein von dem Applikationscontroller ausführbares Programm gespeichert ist, und dem Sicherheitscontroller ein weiterer Speicher zugeordnet ist, in dem ein von dem Sicherheitscontroller ausführbares weiteres Programm gespeichert ist.

Es ist eine Aufgabe, die der Erfindung zu Grunde liegt, ein Verfahren zur Betriebsvalidierung einer Sensoreinheit für ein Fahrzeug sowie eine korrespondierende Sensoreinheit für ein Fahrzeug anzugeben, die zu einem manipulations- und ausfallsicheren Betrieb der Sensoreinheit beiträgt. Es ist ferner eine Aufgabe, die der Erfindung zu Grunde liegt, ein Tachographsystem für ein Fahrzeug anzugeben, das eine hohe Manipulations- und Ausfallsicherheit aufweist sowie einfach und kostengünstig herstellbar ist.

Die Aufgaben werden gelöst durch die unabhängigen Patentansprüche. Vorteilhafte Ausgestaltungen sind in den Unteransprüchen gekennzeichnet.

Gemäß einem ersten Aspekt zeichnet sich die Erfindung aus durch ein Verfahren zur Betriebsvalidierung einer Sensoreinheit für ein Fahrzeug. Die Sensoreinheit umfasst ein Sensorelement, eine Kommunikationsschnittstelle, eine erste Steuervorrichtung und eine zweite Steuervorrichtung.

Die erste Steuervorrichtung umfasst einen Speicher, in dem Programmcode und/oder Programmkonfigurationsdaten zum Betreiben der Sensoreinheit gespeichert ist bzw. sind.

Die zweite Steuervorrichtung umfasst einen Speicher, in dem eine Kopie des Programmcodes und/oder eine Kopie der Programmkonfigurationsdaten zum Betreiben der Sensoreinheit gespeichert ist bzw. sind.

Ein Messsignal wird durch das Sensorelement erfasst. Das Messsignal ist repräsentativ für eine Geschwindigkeit und/oder einen zurückgelegten Weg des Fahrzeugs. Zusätzlich oder alternativ kann das Messsignal ferner repräsentativ für andere Messgrößen sein wie Gewicht, Druck, Temperatur und/oder Ort.

Jeweils ein Validierungssignal wird durch die erste Steuervorrichtung und die zweite Steuervorrichtung ermittelt. Das jeweilige Validierungssignal ist repräsentativ für zumindest einen Teil des bzw. der im jeweiligen Speicher gespeicherten Programmcodes und/oder Programmkonfigurationsdaten.

Wenigstens eines der Validierungssignale wird der jeweils anderen Steuervorrichtung bereitgestellt. Abhängig von den Validierungssignalen wird ein Validierungskennwert durch die jeweilige Steuervorrichtung ermittelt.

Abhängig von dem Validierungskennwert und dem Messsignal wird ein Sensorsignal durch die erste Steuervorrichtung und/oder durch die zweite Steuervorrichtung ermittelt. Das Sensorsignal wird über die Kommunikationsschnittstelle der Sensoreinheit bereitgestellt.

In vorteilhafter Weise leistet die Betriebsvalidierung der Sensoreinheit einen Beitrag zu einem sicheren Betrieb des Fahrzeugs. Insbesondere trägt die Betriebsvalidierung zu einem manipulations- und störungsfreien Betrieb der Sensoreinheit bei. Das Validierungssignal kann beispielsweise zumindest einen Teil des bzw. der im jeweiligen Speicher gespeicherten Programmcodes und/oder Programmkonfigurationsdaten umfassen. Alternativ umfasst das Validierungssignal beispielsweise lediglich eine Prüfsumme, wie einen sogenannten "Hashcode" oder eine CRC-Checksumme (Cyclic Redundancy Check, Zyklische Redundanzprüfung), die repräsentativ ist für den zumindest einen Teil des bzw. der im jeweiligen Speicher gespeicherten Programmcodes und/oder Programmkonfigurationsdaten. Der Validierungskennwert ist insbesondere repräsentativ für eine Übereinstimmung des zumindest einen Teils des bzw. der im jeweiligen Speicher gespeicherten Programmcodes und/oder Programmkonfigurationsdaten. In anderen Worten ermöglicht der Validierungskennwert eine Überprüfung von Programmcode auf Konsistenz ohne großen Zeit- und Rechenaufwand, so dass eine Manipulation des Programmcodes oder ein Fehler im Programmcode erkannt werden kann. Der Programmcode kann auch als Applikationscode bezeichnet werden. Die Programmkonfigurationsdaten können auch als Applikationskonfigurationsdaten bezeichnet werden. Die Konfigurationsdaten legen zum Beispiel eine Variante der Sensoreinheit fest. Alternativ oder zusätzlich umfassen die Konfigurationsdaten Grenzwerte, Kennlinienfelder und/oder freigeschaltete Funktionen.

Der zumindest eine Teil des bzw. der im jeweiligen Speicher gespeicherten Programmcodes und/oder Programmkonfigurationsdaten umfasst beispielsweise eine vorgegebene Datenmenge, beispielsweise ein Datenpaket zwischen 1 Byte und 8 Byte, oder einem ganzzahligen Vielfachen von 8 Byte. Alternativ kann der Teil des bzw. der im jeweiligen Speicher gespeicherten Programmcodes und/oder Programmkonfigurationsdaten auch den bzw. die kompletten im jeweiligen Speicher gespeicherten Programmcode und/oder Programmkonfigurationsdaten umfassen.

In vorteilhafter Weise kann die Betriebsvalidierung der Sensoreinheit im Betrieb der Sensoreinheit erfolgen. Insbesondere erfolgt die Betriebsvalidierung nicht lediglich bei einer Aktualisierung des bzw. der in dem jeweiligen Speicher gespeicherten Programmcodes und/oder Programmkonfigurationsdaten. Das Verfahren wird im Betrieb beispielsweise zyklisch wiederholt, so dass der bzw. die komplette(n) Programmcode und/der Programmkonfigurationsdaten zumindest nach mehrmaliger Durchführung des Verfahrens auf Konsistenz geprüft werden können.

In einer vorteilhaften Ausgestaltung gemäß dem ersten Aspekt wird der Validierungskennwert durch die zweite Steuervorrichtung ermittelt.

Dies hat den Vorteil, dass lediglich ein Validierungssignal durch die erste Steuervorrichtung der zweiten Steuervorrichtung bereitgestellt werden muss. Insbesondere kann dies auf Aufforderung durch die zweite Steuervorrichtung erfolgen. Beispielsweise stellt die zweite Steuervorrichtung der ersten Steuervorrichtung in diesem Zusammenhang ein Aufforderungssignal bereit, das repräsentativ ist für eine Speicheradresse des zumindest einen Teils des bzw. der im jeweiligen Speicher gespeicherten Programmcodes und/oder Programmkonfigurationsdaten, für den die erste Steuervorrichtung ein Validierungssignal ermittelt. Anschließend wird das für den zumindest einen Teil des bzw. der im Speicher der ersten Steuervorrichtung gespeicherten Programmcodes und/oder Programmkonfigurationsdaten repräsentative Validierungssignal durch die erste Steuervorrichtung ermittelt und der zweiten Steuervorrichtung bereitgestellt. Ein Vergleich des Validierungssignals der ersten Steuervorrichtung und des Validierungssignals der zweiten Steuervorrichtung zur Ermittlung des Validierungskennwerts kann in vorteilhafter Weise in der zweiten Steuervorrichtung durchgeführt werden. Bevorzugt ist die zweite Steuervorrichtung als sicherer Mikrokontroller ausgebildet, so dass die Ermittlung des Validierungskennwerts besonders sicher gegenüber Manipulationsversuchen erfolgen kann.

In einer weiteren vorteilhaften Ausgestaltung gemäß dem ersten Aspekt wird dem Sensorsignal das Messsignal zugeordnet. Alternativ oder zusätzlich wird durch Verschlüsseln des Messsignals ein verschlüsseltes Messsignal ermittelt, das dem Sensorsignal zugeordnet wird.

In vorteilhafter Weise ermöglicht das Messsignal unverschlüsselt eine effiziente und zeitnahe Verarbeitung von in dem Messsignal enthaltenen Messdaten. Ferner ermöglicht das verschlüsselte Messsignal eine manipulationssichere Übertragung der in dem Messsignal enthaltenen Messdaten. Das Messsignal zusammen mit dem verschlüsselten Messsignal ermöglichen eine einfache Verifizierung der unverschlüsselten Messdaten sowie deren effiziente und zeitnahe Verarbeitung. Bei dem Messsignal kann es sich beispielsweise um ein Echtzeitsignal (sogenanntes "Real Time Signal") handeln, das beispielhaft als Rechtecksignal übertragen wird. Das verschlüsselte Messsignal kann beispielsweise ein Datensignal (sogenanntes "Data Signal") sein. Insbesondere handelt es sich bei dem Sensorsignal um ein Signal gemäß dem nach Industriestandard "IS016844-3 spezifizierten Protokoll (in der Fassung vom 01.03.2006).

In einer weiteren vorteilhaften Ausgestaltung gemäß dem ersten Aspekt wird das Verschlüsseln des Messsignals durch die zweite Steuervorrichtung durchgeführt.

In vorteilhafter Weise ermöglicht dies eine Validierung des Messsignals und des Programmcodes und/oder der Programmkonfigurationsdaten der Sensoreinheit zugleich, beispielsweise durch eine extern zu der Sensoreinheit angeordnete Kontrolleinheit. Im Falle, dass die zweite Steuervorrichtung als sicherer Mikrokontroller ausgebildet ist kann die Verschlüsselung besonders sicher gegenüber Manipulationsversuchen erfolgen. Insbesondere kann das Verschlüsseln abhängig von dem Validierungskennwert erfolgen.

In einer weiteren vorteilhaften Ausgestaltung gemäß dem ersten Aspekt wird das verschlüsselte Messsignal derart durch Verschlüsseln des Messsignals ermittelt, dass es repräsentativ ist für den Validierungskennwert.

In vorteilhafter Weise kann zur Ausgabe des Validierungskennwerts so auf ein zusätzliches Signal verzichtet werden. Das Verschlüsseln des Messsignals umfasst dabei einen Vorgang, bei dem das Messsignal als Eingangssignal an einer Verschlüsselungseinheit anliegt und das verschlüsselte Messsignal als Ausgangssignal bereitgestellt wird. Insbesondere umfasst das Verschlüsseln des Messsignals also sowohl einen Vorgang, bei dem das Messsignal mit einem Schlüssel kodiert wird, so dass bei einem Entschlüsseln mit einem zu dem Schlüssel korrespondierenden Schlüssel das entschlüsselte Messsignal lesbar ist, also insbesondere mit dem Messsignal übereinstimmen kann, als auch einen Vorgang, bei dem ein von dem Messsignal abweichendes Signal mit dem Schlüssel kodiert wird, einen Vorgang, bei dem das Messsignal mit einem von dem Schlüssel abweichenden Schlüssel kodiert wird, und einen Vorgang, bei dem ein von dem Messsignal abweichendes Signal mit einem von dem Schlüssel abweichenden Schlüssel kodiert wird, so dass bei einem Entschlüsseln mit einem zu dem Schlüssel korrespondierenden Schlüssel das entschlüsselte Messsignal unlesbar ist, also insbesondere mit dem Messsignal nicht übereinstimmt. Beispielsweise wird dem verschlüsselten Messsignal bei einem erkannten Manipulationsversuch ein vorgegebenes Signal zugeordnet, das repräsentativ ist für eine Manipulation des Programmcodes und/oder der Programmkonfigurationsdaten. Alternativ wird dem verschlüsselten Messsignal lediglich ein von dem Messsignal abweichendes Signal zugeordnet, so dass bei einer Validierung des Messsignals, beispielsweise durch eine extern zu der Sensoreinheit angeordnete Kontrolleinheit, wenigstens ein Fehler bzw. eine Manipulation in einer Prozesskette zwischen dem Sensorelement und der Kontrolleinheit detektiert werden kann. Beispielsweise ermittelt die Kontrolleinheit in diesem Zusammenhang einen Vertrauenskennwert, der repräsentativ ist für diesen Fehler bzw. eine Manipulation der ersten Sensorvorrichtung und/oder des empfangenen Sensorsignals.

In einer weiteren vorteilhaften Ausgestaltung gemäß dem ersten Aspekt wird der zumindest eine Teil des bzw. der in dem jeweiligen Speicher gespeicherten Programmcodes und/oder Programmkonfigurationsdaten zufällig ausgewählt.

In vorteilhafter Weise beugt dies Manipulationsversuchen vor, beispielsweise in dem der durch die zweite Steuervorrichtung angeforderte zumindest eine Teil des bzw. der in dem jeweiligen Speicher gespeicherten Programmcodes und/oder Programmkonfigurationsdaten nicht oder nur schwer vorhersagbar ist. Durch die zufällige Auswahl eines zu überprüfenden Programmcodebereichs ist eine vollständige Überprüfung des Programmcodes auch gegeben, wenn ein Zyklus zur Betriebsvalidierung der Sensoreinheit unterbrochen wurde, beispielsweise durch eine Spannungsunterbrechung.

Gemäß einem zweiten Aspekt zeichnet sich die Erfindung aus durch eine Sensoreinheit für ein Fahrzeug. Die Steuereinheit umfasst ein Sensorelement, eine Kommunikationsschnittstelle, eine erste Steuervorrichtung und eine zweite Steuervorrichtung. Die Sensoreinheit ist ausgebildet, eine Betriebsvalidierung der Sensoreinheit gemäß dem ersten Aspekt durchzuführen.

In vorteilhafter Weise leistet die Betriebsvalidierung der Sensoreinheit einen Beitrag zu einem sicheren Betrieb des Fahrzeugs. Insbesondere trägt die Betriebsvalidierung zu einem manipulations- und ausfallsicheren bzw. störungsfreien Betrieb der Sensoreinheit bei. Die Kommunikationsschnittstelle der Sensoreinheit kann beispielsweise in einer Baueinheit mit der ersten oder zweiten Steuervorrichtung angeordnet sein. Alternativ kann die Kommunikationsschnittstelle der Sensoreinheit beispielsweise separat von der ersten und zweiten Steuervorrichtung angeordnet sein.

In einer vorteilhaften Ausgestaltung gemäß dem zweiten Aspekt ist die zweite Steuervorrichtung ausgebildet, von dem Sensorsignal umfasste Daten zu verschlüsseln. Dies trägt dazu bei, dass die von dem Sensorsignal, welches durch die Sensoreinheit bereitgestellt wird, umfassten Daten verifiziert und/oder sicher übertragen werden können. Insbesondere ermöglicht dies eine erhöhte Sicherheit der Sensoreinheit gegenüber Manipulationsversuchen.

In einer weiteren vorteilhaften Ausgestaltung gemäß dem zweiten Aspekt ist die zweite Steuervorrichtung als sicherer Mikrokontroller ausgebildet ist. Dies trägt zu einer besonders hohen Sicherheit der Sensoreinheit gegenüber Manipulationsversuchen bei. Die zweite Steuervorrichtung kann auch als sogenannter "Secure Microcontroller" bezeichnet werden. Beispielsweise weist die zweite Steuervorrichtung in diesem Zusammenhang ein Verschlüsselungsmodul auf. Insbesondere genügt die zweite Steuervorrichtung der Common Criteria Stufe EAL4+ (Evaluation Assurance Level) gemäß ISO 15408 Version 3.1 oder einer höheren Stufe.

Gemäß einem dritten Aspekt zeichnet sich die Erfindung aus durch ein Tachographsystem für ein Fahrzeug. Das Tachographsystem umfasst eine Sensoreinheit gemäß dem zweiten Aspekt und einen Tachographen mit einer Kommunikationsschnittstelle.

Die Kommunikationsschnittstelle der Sensoreinheit ist signaltechnisch mit der Kommunikationsschnittstelle des Tachographen gekoppelt. Die Sensoreinheit ist ausgebildet, ein Sensorsignal gemäß dem ersten Aspekt zu ermitteln und über die Kommunikationsschnittstelle der Sensoreinheit bereitzustellen.

Der Tachograph ist ausgebildet, abhängig von einem über die Kommunikationsschnittstelle des Tachographen empfangenen Sensorsignal einen Vertrauenskennwert zu ermitteln. Der Vertrauenskennwert ist repräsentativ für eine Manipulation der ersten Sensorvorrichtung und/oder des empfangenen Sensorsignals.

In vorteilhafter Weise ermöglicht der manipulations- und ausfallsichere bzw. störungsfreie Betrieb der Sensoreinheit einen sicheren und zuverlässigen Betrieb des Tachographsystems, so dass ein Beitrag zu einem sicheren Betrieb des Fahrzeugs geleistet wird. Insbesondere kann ein Beitrag zu einer hohen Manipulations- und Ausfallsicherheit des Tachographsystems sowie dessen einfacher und kostengünstiger Herstellung geleistet werden.

Ein Betreiben der Sensoreinheit gemäß dem ersten Aspekt ermöglicht dabei eine Validierung des Sensorsignals sowie des Programmcodes und/oder der Programmkonfigurationsdaten der Sensoreinheit zugleich abhängig von dem Sensorsignal. Insbesondere ermöglicht dies eine Kompatibilität zu einem Tachographen, der lediglich zur Validierung des Sensorsignals ausgebildet ist. In vorteilhafter Weise kann das Tachographsystem so besonders kostengünstig hergestellt werden. Bei dem Tachographen kann es sich insbesondere um einen digitalen Tachographen handeln.

Ausführungsbeispiele sind im Folgenden anhand der schematischen Zeichnungen näher erläutert.

Es zeigen:
- Figur 1: ein schematisch dargestelltes Tachographsystem für ein Fahrzeug,
- Figur 2a: ein Ablaufdiagramm zur Betriebsvalidierung einer Sensoreinheit des Tachographsystems gemäß Figur 1 und
- Figur 2b: ein Ablaufdiagramm zum Betreiben des Tachograph-systems gemäß Figur 1.

Elemente gleicher Konstruktion oder Funktion sind figurenübergreifend mit den gleichen Bezugszeichen versehen.

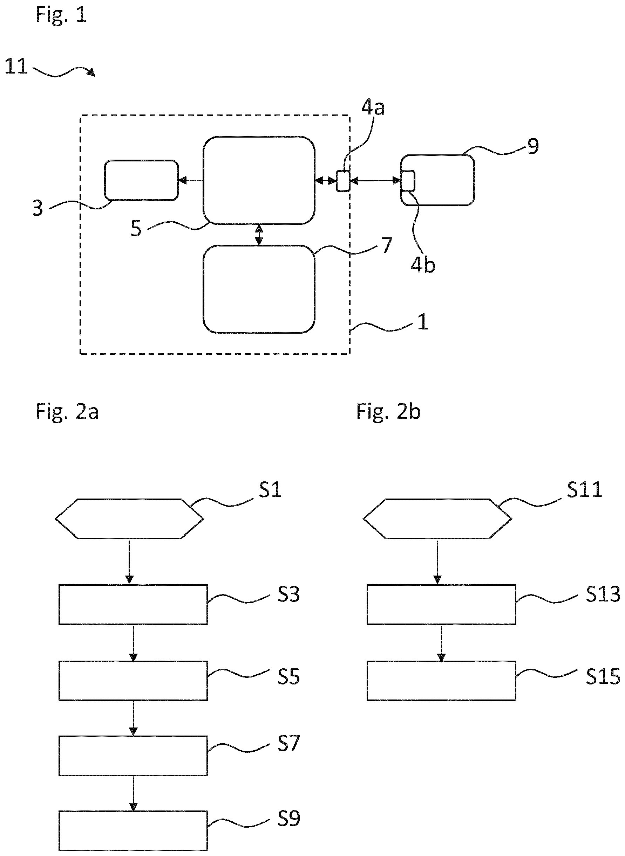

Figur 1 zeigt ein schematisch dargestelltes Tachographsystem 11 für ein Fahrzeug. Das Tachographsystem 11 umfasst eine Sensoreinheit 1, die auch als sogenannter "Secure Speed Sensor" bezeichnet werden kann. Das Tachographsystem 11 umfasst ferner einen Tachographen 9, der auch als "Digital Tachograph" bezeichnet werden kann. Der Sensoreinheit 1 und dem Tachographen 9 sind jeweils eine Kommunikationsschnittstelle 4a, 4b zugeordnet, über die sie signaltechnisch miteinander gekoppelt sind. Insbesondere handelt es sich bei der Kommunikationsschnittstelle 4a, 4b um eine Schnittstelle gemäß ISO16844-3 (in der Fassung vom 01.03.2006).

Die Sensoreinheit 1 umfasst ein Sensorelement 3, das ausgebildet ist, eine aktuelle Geschwindigkeit und/oder einen zurückgelegten Weg des Fahrzeugs zu erfassen. Die Sensoreinheit 1 umfasst ferner eine erste und zweite Steuervorrichtung 5, 7. Die erste Steuervorrichtung 5 ist mit dem Sensorelement 3 gekoppelt und kann auch als "Applikationsmikrokontroller" bezeichnet werden. Die zweite Steuervorrichtung 7 ist signaltechnisch insbesondere bidirektional mit der ersten Steuervorrichtung 5 gekoppelt. Bei der zweiten Steuervorrichtung 7 handelt es sich bevorzugt um einen sicheren Mikrokontroller (sogenannter "Secure Microcontroller"). In diesem Ausführungsbeispiel ist die Kommunikationsschnittstelle 4a der Sensoreinheit 1 separat von den beiden Steuervorrichtungen 5, 7 angeordnet. Alternativ hierzu kann die Kommunikationsschnittstelle 4a der Sensoreinheit 1 auch in einer Baueinheit mit einer der Steuervorrichtungen 5, 7, insbesondere der ersten Steuervorrichtung 5 ausgebildet sein.

Die erste Steuervorrichtung 5 umfasst einen Speicher, in dem Applikations- bzw. Programmcode und Applikations- bzw. Programmkonfigurationsdaten zum Betreiben der Sensoreinheit 1 gespeichert sind. Die zweite Steuervorrichtung 7 umfasst ebenfalls einen Speicher, in dem der Applikationscode und die Applikationskonfigurationsdaten vollständig gespiegelt zu der ersten Steuervorrichtung 5 gespeichert sind.

Für die Überprüfung des Applikationscodes wird dieser zusätzlich im sicheren Mikrokontroller gespeichert. Zyklisch gibt der sichere Mikrokontroller einen zufälligen Codebereich zur Überprüfung vor. Beide Mikrokontroller berechnen über diesen zufälligen Codebereich zum Beispiel eine CRC-Checksumme. Die Checksummen werden ausgetauscht und verglichen. Zur Überprüfung können zufällig ausgewählte Codebereiche zyklisch verglichen werden. Ergänzend dazu kann, damit zum Vergleich der Inhalt nicht ausgetauscht werden muss, über einen zufällig ausgewählten Codebereich auf dem sicheren Mikrokontroller und dem Applikationskontroller eine Checksumme berechnet und miteinander verglichen werden. Dies erfordert lediglich einen geringen Rechenaufwand, da der ausgewählte Codebereich in beiden Mikrokontrollern gespeichert ist und somit direkt verglichen werden kann. Durch die zufällige Auswahl des zu überprüfenden Codebereichs ist eine vollständige Überprüfung auch gegeben, wenn ein Zyklus, zum Beispiel durch eine Spannungsunterbrechung, unterbrochen wird. Über den ausgewählten Bereich kann sofort eine Konsistenzaussage getroffen werden.

Der Sensoreinheit 1 ist beispielsweise ein Daten- und Programmspeicher zugeordnet, in dem ein Programm gespeichert ist, das im Folgenden anhand des Ablaufdiagramms der Figur 2a näher erläutert wird.

Das Programm wird in einem Schritt S1 gestartet, in dem beispielsweise Variablen initialisiert werden. Insbesondere wird ein Messsignal durch das Sensorelement 3 erfasst, das repräsentativ ist für die aktuelle Geschwindigkeit und/oder den zurückgelegten Weg des Fahrzeugs. Zusätzlich oder alternativ kann das Messsignal ferner repräsentativ für andere Messgrößen sein wie Gewicht, Reifendruck und/oder Ort des Fahrzeugs und/oder einer Temperatur einer dem Fahrzeug zugeordneten Komponenente. Das Messsignal wird der ersten Steuervorrichtung 5 anschließend bereitgestellt. Das Programm wird in einem Schritt S3 fortgesetzt.

In dem Schritt S3 wird ein Teil des Speichers, in dem der Programmcode und/oder die Programmkonfigurationsdaten gespeichert sind, zufällig ausgewählt. Beispielsweise wird in diesem Zusammenhang eine Speicheradresse oder ein Speicheradressblock zufällig ausgewählt. Abhängig von dem ausgewählten Teil des Speichers wird ein Validierungssignal ermittelt, das repräsentativ ist für den in dem Teil des Speichers der zweiten Steuervorrichtung 7 gespeicherten Programmcode und/oder den Programmkonfigurationsdaten. Das Programm wird anschließend in einem Schritt S5 fortgesetzt.

In dem Schritt S5 wird ein Aufforderungssignal von der zweiten Steuervorrichtung 7 an die erste Steuervorrichtung 5 übermittelt, das repräsentativ ist für den ausgewählten Teil des Speichers der ersten Steuervorrichtung 5, für den das Validierungssignal der ersten Steuervorrichtung 5 bereitgestellt werden soll. Abhängig von dem Aufforderungssignal bzw. dem in dem ausgewählten Teil des Speichers der ersten Steuervorrichtung 5 gespeicherten Programmcodes und/oder den Programmkonfigurationsdaten ermittelt die erste Steuervorrichtung 5 das entsprechende Validierungssignal. Das Programm wird anschließend in einem Schritt S7 fortgesetzt.

In dem Schritt S7 wird abhängig von den Validierungssignalen ein Validierungskennwert durch die zweite Steuervorrichtung 7 ermittelt. Bei den Validierungssignalen handelt es sich beispielsweise um jeweils einen kurzen Textblock oder eine Checksumme, die lediglich verglichen werden müssen. Im Falle, dass die Validierungssignale übereinstimmen wird dem Validierungskennwert beispielsweise der Wert "Eins" zugewiesen. Anderenfalls wird dem Validierungskennwert beispielsweise der Wert "Null" zugewiesen. Das Programm wird anschließend in einem Schritt S9 fortgesetzt.

In dem Schritt S9 wird abhängig von dem Validierungskennwert und dem durch das Sensorelement 3 bereitgestellten Messsignal ein Sensorsignal ermittelt. Dabei wird im Falle, dass der Validierungskennwert den Wert "Eins" annimmt ein verschlüsseltes Messsignal ermittelt, indem das Messsignal verschlüsselt wird. Das verschlüsselte Messsignal wird zusammen mit dem Messsignal als Sensorsignal an der Kommunikationsschnittstelle 4a der Sensoreinheit 1 bereitgestellt. Anderenfalls, im Falle, dass der Validierungskennwert den Wert "Null" annimmt wird ein verschlüsseltes Messsignal ermittelt, indem ein von dem Messsignal abweichendes Signal verschlüsselt wird. Das verschlüsselte Messsignal wird zusammen mit dem Messsignal als Sensorsignal an der Kommunikationsschnittstelle 4a der Sensoreinheit 1 bereitgestellt. Das Programm wird anschließend in dem Schritt S1 zyklisch fortgesetzt.

Dem Tachographen 9 ist beispielsweise ebenfalls ein Daten- und Programmspeicher zugeordnet, in dem ein Programm gespeichert ist, das im Folgenden anhand des Ablaufdiagramms der Figur 2b näher erläutert wird.

Das Programm wird in einem Schritt S11 gestartet, in dem beispielsweise Variablen initialisiert werden. Insbesondere wird das durch die Sensoreinheit 1 über die Kommunikationsschnittstelle 4a bereitgestellt Sensorsignal erfasst. Das Sensorsignal wird insbesondere aufgeteilt in ein empfangenes, verschlüsseltes Messsignal und ein empfangenes Messsignal. Das Programm wird in einem Schritt S13 fortgesetzt.

In dem Schritt S13 wird durch Entschlüsseln des empfangenen, verschlüsselten Messsignals ein entschlüsseltes Messsignal ermittelt. Das Programm wird in einem Schritt S15 fortgesetzt.

In dem Schritt S15 wird das empfangene Messsignal mit dem entschlüsselten Messsignal verglichen und ein Vertrauenskennwert ermittelt. Im Falle, dass das empfangene Messsignal mit dem entschlüsselten Messsignal übereinstimmt kann dem Echtzeitsignal in diesem Zyklus vertraut werden, eine Betriebsvalidierung der Sensoreinheit 1 und eine Prozesskette hin zu dem Tachographen 9 ist intakt. Das Programm wird anschließend in dem Schritt S11 zyklisch fortgesetzt. Anderenfalls kann dem Echtzeitsignal nicht vertraut werden. Der Vertrauenskennwert ist dann repräsentativ dafür, dass ein Fehler oder eine Manipulation der ersten Sensorvorrichtung 3 und/oder des empfangenen Sensorsignals vorliegt. Das Programm geht dann beispielsweise in einen Fehler- oder Wartungszustand über.

## Patentansprüche

1. Verfahren zur Betriebsvalidierung einer Sensoreinheit (1) für ein Fahrzeug, umfassend ein Sensorelement (3), eine Kommunikationsschnittstelle (4a), eine erste Steuervorrichtung (5), und eine zweite Steuervorrichtung (7), wobei
- die erste Steuervorrichtung (5) einen Speicher umfasst, in dem Programmcode und/oder Programmkonfigurationsdaten zum Betreiben der Sensoreinheit (1) gespeichert ist bzw. sind,
- die zweite Steuervorrichtung (7) einen Speicher umfasst, in dem eine Kopie des Programmcodes und/oder eine Kopie der Programmkonfigurationsdaten zum Betreiben der Sensoreinheit (1) gespeichert ist bzw. sind,
- ein Messsignal durch das Sensorelement (3) erfasst wird, das repräsentativ ist für eine Geschwindigkeit und/oder einen zurückgelegten Weg des Fahrzeugs,
- jeweils ein Validierungssignal durch die Steuervorrichtungen (5, 7) ermittelt wird, das repräsentativ ist für zumindest einen Teil des bzw. der im jeweiligen Speicher gespeicherten Programmcodes und/oder Programmkonfigurationsdaten,
- wenigstens eines der Validierungssignale der jeweils anderen Steuervorrichtung (5, 7) bereitgestellt wird,
- abhängig von den Validierungssignalen ein Validierungskennwert durch die jeweilige Steuervorrichtung (5, 7) ermittelt wird, und
- abhängig von dem Validierungskennwert und dem Messsignal ein Sensorsignal durch die erste Steuervorrichtung (5) und/oder durch die zweite Steuervorrichtung (7) ermittelt wird, das über die Kommunikationsschnittstelle (4a) der Sensoreinheit (1) bereitgestellt wird.

2. Verfahren nach Anspruch 1, bei dem der Validierungskennwert durch die zweite Steuervorrichtung (7) ermittelt wird.

3. Verfahren nach einem der vorstehenden Ansprüche, bei dem
- dem Sensorsignal das Messsignal zugeordnet wird, und/oder
- durch Verschlüsseln des Messsignals ein verschlüsseltes Messsignal ermittelt wird, das dem Sensorsignal zugeordnet wird.

4. Verfahren nach Anspruch 3, bei dem das Verschlüsseln des Messsignals durch die zweite Steuervorrichtung (7) durchgeführt wird.

5. Verfahren nach einem der vorstehenden Ansprüche 3 oder 4, bei dem das verschlüsselte Messsignal derart durch Verschlüsseln des Messsignals ermittelt wird, dass es repräsentativ ist für den Validierungskennwert.

6. Verfahren nach einem der vorstehenden Ansprüche, bei dem der zumindest eine Teil des bzw. der in dem jeweiligen Speicher gespeicherten Programmcodes und/oder Programmkonfigurationsdaten zufällig ausgewählt wird.

7. Sensoreinheit (1) für ein Fahrzeug, umfassend ein Sensorelement (3), eine Kommunikationsschnittstelle (4a), eine erste Steuervorrichtung (5), und eine zweite Steuervorrichtung (7), wobei die Sensoreinheit (1) ausgebildet ist ein Verfahren nach einem der vorstehenden Ansprüche 1 bis 6 durchzuführen.

8. Tachographsystem (11) für ein Fahrzeug, umfassend
- eine Sensoreinheit (1) nach Anspruch 7, und
- einen Tachograph (9) mit einer Kommunikationsschnittstelle (4b), wobei
- die Kommunikationsschnittstelle (4a) der Sensoreinheit (1) signaltechnisch mit der Kommunikationsschnittstelle (4b) des Tachographen (9) gekoppelt ist,
- die Sensoreinheit (1) ausgebildet ist, ein Sensorsignal nach einem der Ansprüche 1 bis 6 zu ermitteln und über die Kommunikationsschnittstelle (4a) der Sensoreinheit (1) bereitzustellen, und
- der Tachograph (9) ausgebildet ist, abhängig von einem über die Kommunikationsschnittstelle (4b) des Tachographen (9) empfangenen Sensorsignal einen Vertrauenskennwert zu ermitteln, der repräsentativ ist für eine Manipulation der ersten Sensorvorrichtung (3) und/oder des empfangenen Sensorsignals.

## Claims

1. Method for operational validation of a sensor unit (1) for a vehicle, comprising a sensor element (3), a communication interface (4a), a first control apparatus (5) and a second control apparatus (7), wherein
- the first control apparatus (5) comprises a memory that stores program code and/or program configuration data for operating the sensor unit (1),
- the second control apparatus (7) comprises a memory that stores a copy of the program code and/or a copy of the program configuration data for operating the sensor unit (1),
- a measurement signal is captured by the sensor element (3), which measurement signal is representative of a speed and/or a distance covered by the vehicle,
- a respective validation signal is ascertained by the control apparatuses (5, 7), which validation signal is representative of at least one part of the program code and/or program configuration data stored in the respective memory,
- at least one of the validation signals is provided to the respective other control apparatus (5, 7),
- the validation signals are taken as a basis for a validation identification value being ascertained by the respective control apparatus (5, 7), and
- the validation identification value and the measurement signal are taken as a basis for a sensor signal being ascertained by the first control apparatus (5) and/or by the second control apparatus (7), which sensor signal is provided via the communication interface (4a) of the sensor unit (1).

2. Method according to Claim 1, in which the validation identification value is ascertained by the second control apparatus (7).

3. Method according to either of the preceding claims, in which
- the sensor signal is assigned the measurement signal, and/or
- encryption of the measurement signal is used to ascertain an encrypted measurement signal that is assigned to the sensor signal.

4. Method according to Claim 3, in which the encryption of the measurement signal is performed by the second control apparatus (7).

5. Method according to either of the preceding Claims 3 and 4, in which the encrypted measurement signal is ascertained by encrypting the measurement signal such that it is representative of the validation identification value.

6. Method according to one of the preceding claims, in which the at least one part of the program code and/or program configuration data stored in the respective memory is selected at random.

7. Sensor unit (1) for a vehicle, comprising a sensor element (3), a communication interface (4a), a first control apparatus (5) and a second control apparatus (7), wherein the sensor unit (1) is designed to perform a method according to one of the preceding Claims 1 to 6.

8. Tachograph system (11) for a vehicle, comprising
- a sensor unit (1) according to Claim 7, and
- a tachograph (9) having a communication interface (4b), wherein
- the communication interface (4a) of the sensor unit (1) is coupled for signalling purposes to the communication interface (4b) of the tachograph (9),
- the sensor unit (1) is designed to ascertain a sensor signal according to one of Claims 1 to 6 and to provide it via the communication interface (4a) of the sensor unit (1), and
- the tachograph (9) is designed to take a sensor signal received via the communication interface (4b) of the tachograph (9) as a basis for ascertaining a trust identification value that is representative of a manipulation of the first sensor apparatus (3) and/or of the received sensor signal.

## Revendications

1. Procédé de validation du fonctionnement d'une unité à capteur (1) pour véhicule automobile, comprenant un élément capteur (3), une interface de communication (4a), un premier dispositif de commande (5) et un second dispositif de commande (7), dans lequel
- le premier dispositif de commande (5) comprend une mémoire dans laquelle sont est ou sont stocké(s) le code de programme et/ou des données de programmation pour le fonctionnement de l'unité à capteur (1),
- le second dispositif de commande (7) comprend une mémoire dans laquelle est ou sont stockée (s) une copie du code de programme et/ou une copie des données de configuration du programme pour le fonctionnement de l'unité à capteur (1),
- un signal de mesure qui est représentatif de la vitesse et/ou de la distance parcourue par le véhicule est acquis par l'élément capteur (3),
- un signal de validation qui est représentatif d'au moins une partie du code de programme et/ou des données de configuration de programme stockés dans la mémoire respective est déterminé par les dispositifs de commande (5, 7),
- au moins l'un des signaux de validation de l'autre dispositif de commande respectif (5, 7) est fourni,
- une valeur caractéristique de validation est déterminée par l'appareil de commande respectif (5, 7) en fonction des signaux de validation, et
- un signal de capteur est déterminé par le premier dispositif de commande (5) et/ou par le second dispositif de commande (7) fourni par l'intermédiaire de l'interface de communication (4a) de l'unité à capteur (1), en fonction de la valeur caractéristique de validation et du signal de mesure.

2. Procédé selon la revendication 1, dans lequel la valeur caractéristique de validation est déterminée par le second dispositif de commande (7).

3. Procédé selon l'une des revendications précédentes, dans lequel
- le signal de mesure est associé au signal de capteur, et/ou
- un signal de mesure crypté est déterminé en cryptant le signal de mesure associé au signal de capteur.

4. Procédé selon la revendication 3, dans lequel le codage du signal de mesure est effectué par le second dispositif de commande (7).

5. Procédé selon l'une des revendications 3 ou 4 précédentes, dans lequel le signal de mesure crypté est déterminé en cryptant le signal de mesure de manière à ce qu'il soit représentatif de la valeur caractéristique de validation.

6. Procédé selon l'une des revendications précédentes, dans lequel au moins une partie du code de programme et/ou des données de configuration de programme stockés dans la mémoire respective est sélectionnée aléatoirement.

7. Unité à capteur (1) pour véhicule automobile, comprenant un élément capteur (3), une interface de communication (4a), un premier dispositif de commande (5) et un second dispositif de commande (7), dans lequel l'unité à capteur (1) est configurée pour mettre en oeuvre un procédé selon l'une des revendications 1 à 6 précédentes.

8. Système de tachygraphe (11) destiné à un véhicule, comprenant
- une unité à capteur (1) selon la revendication 7, et
- un tachygraphe (9) ayant une interface de communication (4b), dans lequel
- l'interface de communication (4a) de l'unité à capteur (1) est couplée par signal à l'interface de communication (4b) du tachygraphe (9),
- l'unité à capteur (1) est configurée pour déterminer un signal de capteur selon l'une des revendications 1 à 6 et pour le fournir par l'intermédiaire de l'interface de communication (4a) de l'unité à capteur (1), et
- le tachygraphe (9) est configuré pour déterminer, en fonction d'un signal de capteur reçu par l'intermédiaire de l'interface de communication (4b) du tachygraphe (9), une valeur caractéristique de confiance représentative d'une manipulation du premier dispositif de capteur (3) et/ou du signal de capteur reçu.
